# EUROPEAN PATENT APPLICATION

(11) **EP 2 506 201 A1**
(43) Date of publication of application: **03.10.2012**
(21) Application number: 11160255.3
(22) Date of filing: 29.03.2011
(51) Int. Cl.: G06Q 20/00

(54) **Mobile wireless communications device configured to authorize transaction based upon movement sensor and associated methods**

(71) Applicant: Research In Motion Limited, Waterloo, ON N2L 3W8 (CA)
(72) Inventor: Hagedorn, David J., Waterloo Ontario N2L 3W8 (CA); Carbonell Duque, Santiago, Bogota (CO)
(74) Representative: Noble, Nicholas

(57) **Abstract**

A transaction processing system includes an authorization server and an authorization server. A transaction terminal includes a first near field communication (NFC) device and is configured to perform a transaction based upon the authorization data. A mobile wireless communications device includes a second NFC device, at least one movement sensor, and a processor. The processor is configured to send a transaction request via the second NFC device to the first NFC device of the transaction terminal, and send detected data representing a pattern of movement detected by the at least one movement sensor to the authorization server. The authorization server is configured to generate authorization data based upon the detected data. The transaction terminal is configured to perform the transaction based upon the transaction request and the authorization data.

## Description

### Technical Field

The present disclosure relates to communications systems, and, more particularly, to mobile wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multifunction devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

### Brief Description of the Drawings

FIG. 1 is a schematic block diagram of a transaction processing system in accordance with an example embodiment.

FIG. 2 is a schematic block diagram of a transaction processing system in accordance with an alternative example embodiment.

FIG. 3 is a schematic block diagram of a transaction processing system in accordance with a further example embodiment.

FIG. 4 a schematic block diagram of a transaction processing system in accordance with an additional example embodiment.

Fig. 5 is a flowchart of a method of operating the transaction processing system of FIG. 2.

FIG. 6 is a flowchart of a method of operating the transaction processing system of FIG. 3.

FIG. 7A shows the mobile wireless communications device of FIG. 1 at the start of being moved in a pattern of movement, at a first time.

FIG. 7B shows the mobile wireless communications device of FIG. 1 being moved in a pattern of movement, at a second time.

FIG. 7C shows the mobile wireless communications device of FIG. 1 at the end of being moved in a pattern of movement, at a third time.

FIG. 8 is a schematic block diagram illustrating example components of a mobile wireless communications device that may be used with the transaction processing systems of FIGS. 1, 2, 3, and 4.

### Detailed Description

The present description is made with reference to the accompanying drawings, in which various example embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation and multiple prime notation are used to indicate similar elements or steps in alternative embodiments.

Generally speaking, a transaction processing system is provided herein which may include an authorization server and a transaction terminal. The transaction terminal may include a first near field communication (NFC) device. The system may further include a mobile wireless communications device, which may include a second NFC device, at least one movement sensor, and a processor configured to send a transaction request to the first NFC device of the transaction terminal, and to send detected gesture data representing a pattern of movement detected by the at least one movement sensor to the authorization server. The authorization server may be configured to generate authorization data based upon the detected gesture data, and the transaction terminal may be configured to perform a transaction based upon the transaction request and the authorization data. This transaction processing system advantageously allows for quick, easy, and secure authorization of transactions.

In addition, the authorization server may also be configured to send the authorization data to the mobile wireless communications device, and the processor may also be configured to send the authorization data to the transaction terminal via communication between the first and second NFC devices.

Also, the mobile wireless communications device may further comprise a wireless transceiver, and the processor may be configured to send the detected gesture data to the authorization server via the wireless transceiver. The processor may be configured to send the detected gesture data to the authorization server via the transaction terminal.

Moreover, the mobile wireless communications device may include an input device, and the processor may generate the detected gesture data based upon the pattern of movement detected by the at least one movement sensor and the input device.

In some applications, the authorization server may further comprise a memory configured to store gesture data. The authorization server may then be configured to generate the authorization data by comparing the detected gesture data to the stored gesture data. In accordance with one example, the transaction may comprise causing a transfer of funds from a payment account associated with the authorization data to a merchant account. In another example, the transaction may comprise a security transaction. The at least one movement sensor may include at least one of an accelerometer, a magnetometer, or a gyroscope, for example.

A method aspect is directed to a method of operating transaction processing system comprising an authorization server, a mobile wireless communications device, and a transaction terminal. The method may comprise sending detected gesture data representing a pattern of movement detected by at least one movement sensor of the mobile wireless communications device to the authorization server using a processor of the mobile wireless communications device. The method may also include generating authorization data based upon the detected gesture data, using a processor of the authorization server, and engaging wireless communications between the mobile wireless communications device and the transaction terminal via cooperation between a first NFC device of the transaction terminal and a second NFC device of the mobile wireless communications device. The method may further include performing a transaction based upon the authorization data, using the transaction terminal.

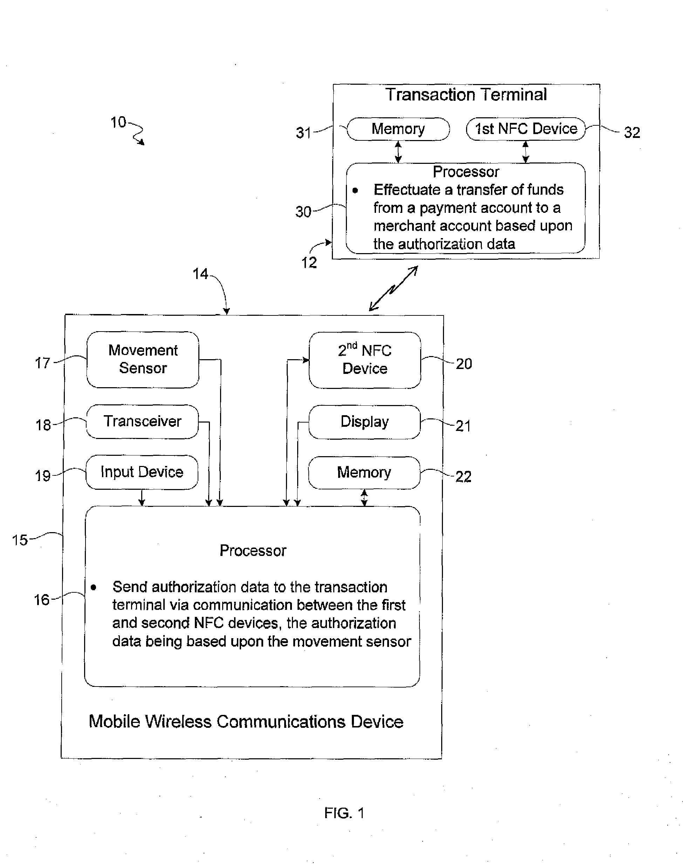

Referring initially to FIG. 1, a transaction processing system **10** is now described. The transaction processing system **10** illustratively includes a transaction terminal **12**, such as a point-of-sale (POS) terminal, for example. The transaction terminal **12** includes a processor **30** coupled to a memory **31** and a first NFC device **32**. The processor **30** is configured to effectuate a transfer of funds from a payment account, such as a bank account (e.g., checking account, savings account, debit card, etc.) or a credit card or a gift card, to a merchant account, based upon received authorization data.

The transaction processing system **10** also illustratively includes a mobile wireless communications device **14**. Example mobile wireless communications devices **14** may include portable or personal media players (e.g., music or MP3 players, video players, etc.), remote controls (e.g., television or stereo remotes, etc.), portable gaming devices, portable or mobile telephones, smartphones, tablet computers, etc. In this embodiment, the mobile wireless communications device **14** is capable of sending authorization data, such as transaction authorization data, to the transaction terminal **12.**

The mobile wireless communications device **14** includes a processor **16** coupled to a movement sensor **17,** transceiver **18,** an input device **19,** a second NFC device **20,** a display **21,** and a memory **22.** The mobile wireless communications device **14** includes a housing **15** carrying the processor **16,** the movement sensor **17,** the transceiver **18,** the input device **19,** the second NFC device **20,** the display **21,** and the memory **22.**

Generally speaking, the movement sensor **17** may comprise a sensor or combination of sensors that are capable of determining movement of the mobile wireless communications device **14.** For example, the movement sensor **17** may comprise an accelerometer, a magnetometer, or a gyroscope. In some applications, the movement sensor **17** may be a camera or an image sensor.

The input device **19** may comprise a keyboard, a touch sensitive pad, a trackball, a thumbwheel, a button, a microphone, or other suitable device, for example. It should be appreciated that in some applications, the display **21** may comprise a touch sensitive display, and may therefore serve as the input device **19**. In addition, the transceiver **18** may comprise a cellular transceiver, and may be configured to perform both voice and data cellular communications. The memory **22** may include volatile and non-volatile portions. Other wireless formats may also be used, such as Bluetooth, wireless local area networks (WLANs), and WiMAX, for example.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

The processor **16** is configured to send authorization data to the transaction terminal **12** via communication between the first NFC device **32** and second NFC device **20.** The authorization data is based upon the movement sensor **17,** as will be described in further detail below.

The authorization data may be data that indicates an authorization for funds to be transferred from the payment account to the merchant account, and not merely data indicating an account number or identifier of the payment account. Alternatively, the authorization data may be the account number or account access information. It should also be noted that in some embodiments the authorization data may be transaction terminal **12** and then authenticated, an in other embodiments the authentication may be performed by the mobile wireless communications device **14** and payment details sent to the transaction terminal as the authorization data. For example, a particular credit card account may be accessible over NFC based upon a gesture, and the transaction terminal **12** (e.g., a payment terminal) "sees" the credit card information just as if the user had physically swiped the credit card, as will be discussed further below.

The movement sensor **17** may detect an orientation of the mobile wireless communications device **14,** as well as changes to the orientation. The movement sensor **17** may also determine the direction in which the mobile wireless communications device **14** is pointing (e.g., north, south, east, west, etc.). Further, the movement sensor **17** may determine acceleration of the mobile wireless communications device **14** in a given direction.

The movement sensor **17** may detect movement of the mobile wireless communications device **14** in a pattern of movement representing a "gesture", and the authorization data may accordingly be based upon such a gesture. As a brief example, an example gesture may comprise holding the mobile wireless communications device **14** such that it is perpendicular with the ground, rotating it such that it is parallel to the ground, and then shaking it twice. Generally speaking, a gesture may comprise a movement, sequence, or pattern of movements of the mobile wireless communications device **14.**

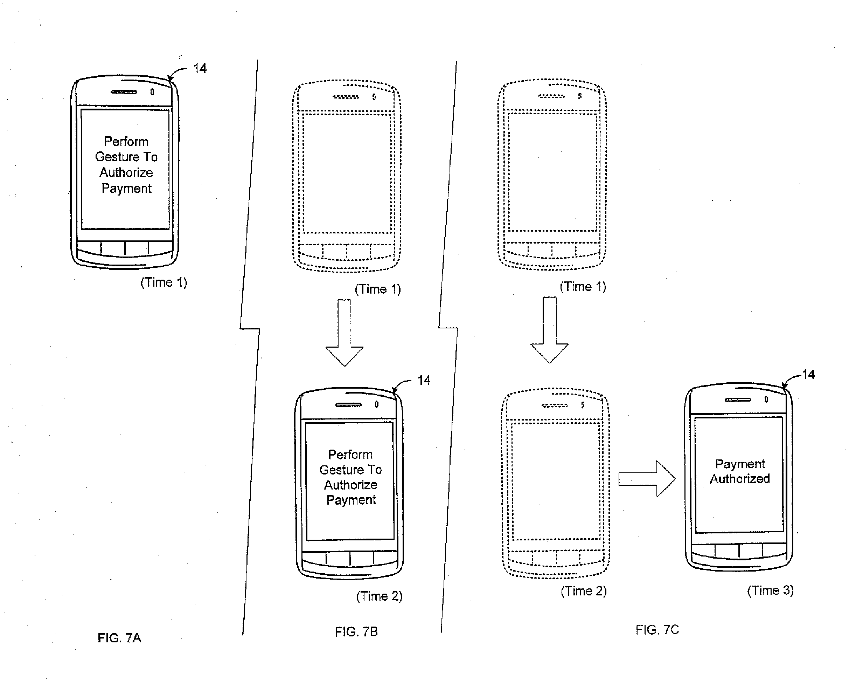

An example gesture is shown in FIGS. 7A-7C. Here, the mobile wireless communications device **14** presents a prompt stating "Perform Gesture To Authorize Payment" on the display **21,** and is held at a first location during a first time (Time 1), as seen in FIG. 7A. The mobile wireless communications device **14** is then moved downward from the first location to a second location at a second time (Time 2), as shown in FIG. 7B. Thereafter, the mobile wireless communications device **14** is moved to the right from the second location to a third location at a third time (Time 3), as seen in FIG. 7C. This completes the gesture, and the display **21** displays a "Payment Authorized" message.

The gesture may also include orienting the mobile wireless communications device **14** in a given direction. For example, one gesture may be to orient the mobile wireless communications device **14** such that it is facing north, then shake the mobile wireless communications device three times. In such a case wherein the gesture includes orientation of the mobile wireless communications device **14** in a direction, the processor **16** may display a compass on the display **21,** allowing an individual to more easily orient the mobile wireless communications device in the desired direction.

In some examples, a gesture may also include input received via the input device **19.** For example, a gesture may include moving the mobile wireless communications device **14** in a first direction, pressing a button of the input device **19,** then moving the mobile wireless communications device in a second direction. If the input device **19** comprises a microphone, the gesture may include moving the mobile wireless communications device **14** in a first direction, speaking a word or phrase, then moving the mobile wireless communications device in a second direction, for example.

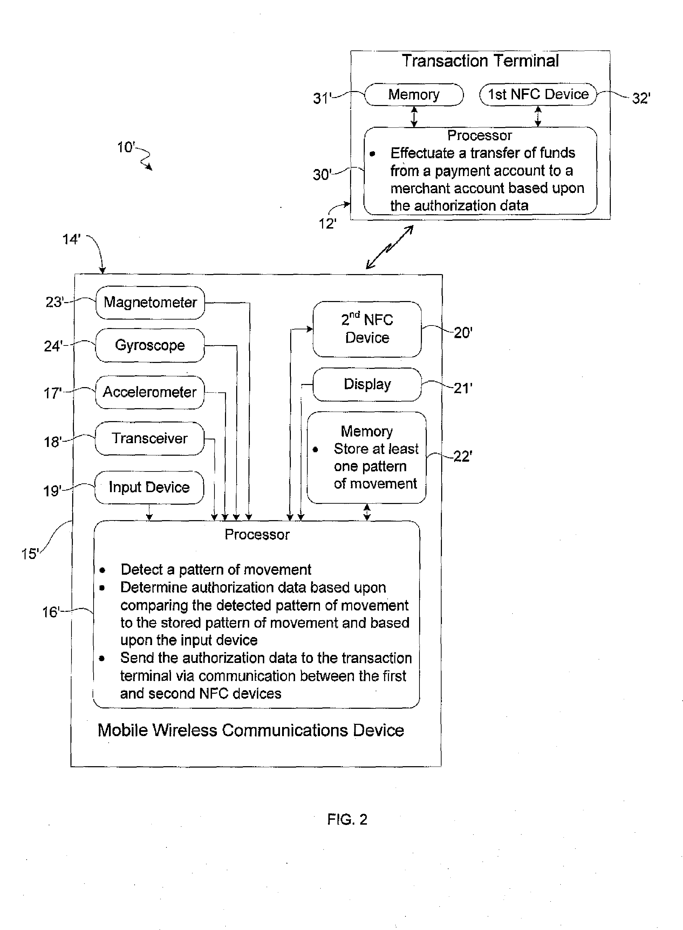

In some example embodiments, the processor **16** may detect the pattern of movement, determine the authorization data based upon the pattern of movement, and send authorization data to the transaction terminal **12.** One such example embodiment is now described with reference to FIG. 2. Here, the mobile wireless communications device **14'** includes an accelerometer **17',** a magnetometer **23',** and a gyroscope **24',** although it should be understood that various combinations of these or other motion sensors may be used in different embodiments. The accelerometer **17'** is configured to detect acceleration of the mobile wireless communications device **14',** and is therefore also capable of determining a change in the orientation of the mobile wireless communications device. In addition, the magnetometer **23'** is configured to determine the direction in which the mobile wireless communications device **14'** is pointing (e.g., north, south, east, west, etc.). Further, the gyroscope **24'** is configured to detect an orientation of the mobile wireless communications device **14',** as well as changes to the orientation. That is, the gyroscope **24'** may detect when the mobile wireless communications device **14'** is turned, twisted, or pointed in a given direction.

The memory **22'** stores at least one pattern of movement representing a gesture. This pattern of movement may include motion of the mobile wireless communications device **14'** in any direction, as well as turning, twisting, and shaking of the mobile wireless communications device, together with input received via the input device **19'.** The stored pattern of movement may also include orientations of the mobile wireless communications device **14'** in one or more directions, for example.

The stored pattern of movement may be stored in the memory **22'** during an association setting mode. In this mode, a gesture is performed, saved in the memory **22',** and then associated with a given payment account via the input device **19'.** Default patterns of movement may also be stored, such as at a time of manufacture or initialization of the mobile wireless communications device **14',** for example.

The processor **16'** detects a pattern of movement via at least one of the accelerometer **17',** the magnetometer **23',** or the gyroscope **24',** for example. The processor **16'** then compares the detected pattern of movement to the stored pattern of movement, and determines the authorization data based upon that comparison. Therefore, if the detected pattern of movement sufficiently matches or substantially corresponds with the stored pattern of movement, the authorization data will be generated. If the detected pattern of movement does not sufficiently match or substantially correspond with the stored pattern of movement, the authorization data will not be generated. The processor **16'** then sends the authorization data to the transaction terminal **12'** via communications between the first NFC device **32'** and the second NFC device **20',** and the transaction terminal **12'** may then effectuate the transfer of funds from the payment account to the merchant account based upon the authorization data.

Due to the minute, yet detectable, differences in the way any given individual will perform a given gesture, authorization of a transfer of funds based upon a detected gesture or pattern of movement may be particularly secure. For example, different individuals may hold the mobile wireless communications device **14'** in a different position in their hands, and such an orientation may be detected via the gyroscope **24'.** Different individuals may move the mobile wireless communications device **14'** more quickly or more slowly, or may change the direction in which the mobile wireless communications device is moving more forcefully or less forcefully, which may be detected via the accelerometer **17'.**

Therefore, even an unauthorized user of the mobile wireless communications device **14'** who is generally aware of the proper gesture to perform to authorize a transaction may not be able to perform the gesture in such a way that the detected pattern of movement matches the stored pattern of movement (e.g., the unauthorized user may perform the gesture too quickly or slowly, may change directions while performing the gesture too forcefully or not forcefully enough, or may hold the mobile wireless communications device at an improper angle). This transaction processing system **10'** therefore enhances the security of transactions over conventional transaction processing systems.

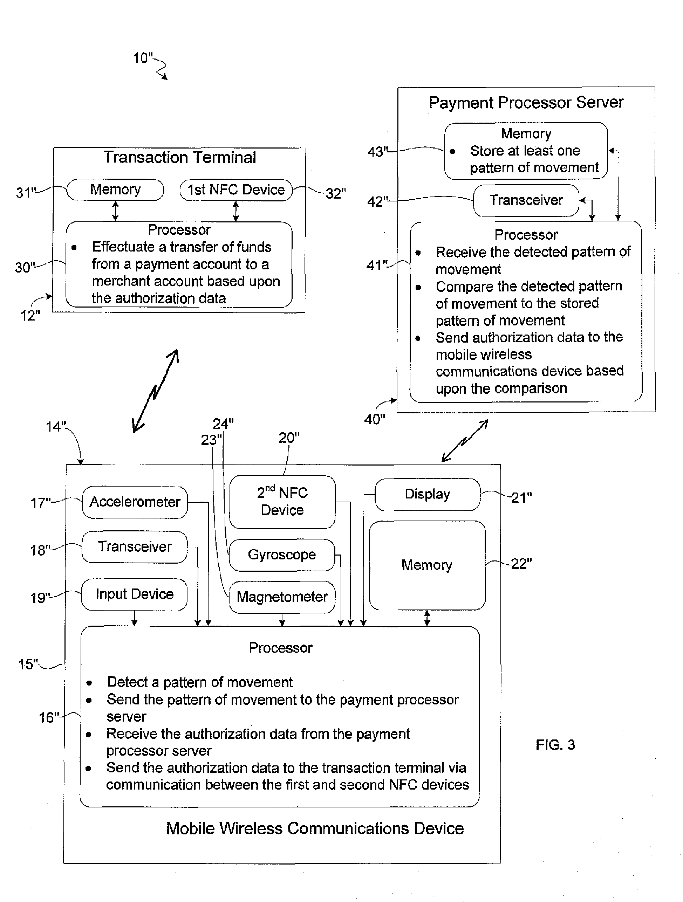

In other embodiments, the processor **16** may be configured to detect the pattern of movement, send detected gesture data representing the pattern of movement to a server which determines the authorization data based upon the pattern of movement, and send authorization data to the transaction terminal **12.** One such example embodiment is now described with reference to FIG. 3.

In this example embodiment, the transaction processing system **10"** includes an authorization server, which illustratively comprises a payment processor server **40".** The payment processor server **40"** includes a processor **41"** coupled to a transceiver **42"** and a memory **43".** The memory **43"** is configured to store at least one pattern of movement representing a gesture.

The processor **16"** of the mobile wireless communications device **14"** is configured to detect a pattern of movement via at least one of the following: accelerometer **17",** magnetometer **23",** gyroscope **24",** or any combination thereof, for example. The processor **16"** then sends the detected gesture data representing the pattern of movement to the payment processor server **40"** via the transceiver **18".**

The processor **41"** of the payment processor server **40",** after receiving the gesture data representing detected pattern of movement, compares the gesture data representing the detected pattern of movement to the stored gesture data representing a stored pattern of movement. The processor **41"** then generates and sends the authorization data to the mobile wireless communications device using the transceiver **42".**

The stored pattern of movement may be stored in the memory **22"** during an association setting mode. In this mode, a gesture is performed, and data representative of the gesture is then sent from the mobile wireless communications device **14"** to the payment processor server **40".** Data representative of the gesture is saved in the memory **22"** of the payment processor server **40",** and then associated with a given payment account via the input device **19"** of the mobile wireless communications device **14".**

The processor **16"** of the mobile wireless communications device **14"** receives the authorization data from the payment processor server **40",** and in turn sends the authorization data to the transaction terminal **12"** via communication between the first NFC device **32"** and second NFC device **20".** The transaction terminal **12"** then effectuates the transfer of funds from the payment account to the merchant account.

In some applications, this transaction processing system **10"** may provide for additional security, as the proper pattern or patterns of movement are not stored in the memory **22"** of the mobile wireless communications device **14",** but rather in the memory **43"** of the payment processor server **40".**

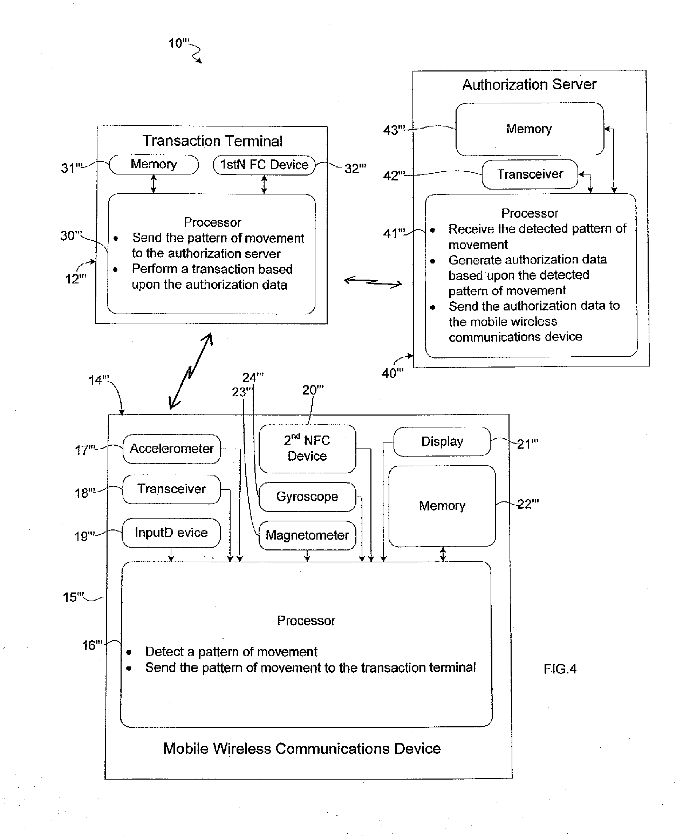

In some embodiments, the processor **16"** may be configured to detect the pattern of movement, and send the data representing the pattern of movement to an authorization server **40",** which determines the authorization data based upon the pattern of movement, either directly or indirectly. One such example embodiment is now described with reference to FIG. 4.

In this example embodiment, the transaction processing system **10"'** includes a transaction terminal **12"',** authorization server **40"',** and mobile wireless communications device **14"'.** Here, the processor **16"'** is configured to detect a pattern of movement (as described in detail above), and to then send data representing the pattern of movement to the transaction terminal **12"'** via communication between the first NFC device **32"'** and second NFC device **20"'.**

The transaction terminal **12"'** receives the data representing the pattern of movement, and in turn sends it to the authorization server **40"'.** The processor **41"'** of the authorization server **40"'** receives the data representing the pattern of movement, generates authorization data based thereupon, and sends the authorization data back to the transaction terminal **12"'.** The transaction terminal **12"'** then performs a transaction based upon the authorization data.

In some applications, the processor **41"'** may send the authorization data to the mobile wireless communications device **14"'** instead of the transaction terminal **12"',** and that the mobile wireless communications device **14"'** may then in turn send the authorization data to the transaction terminal 12"' via communication between the first NFC device **32"'** and second NFC device **20"'.**

The transaction performed by the transaction terminal **12"'** need not be a payment transaction involving a transfer of funds, and may include other types of transactions. The transaction terminal **12"'** may be associated with a physical security device, such as lock on a door or a security barrier (e.g. gate, turnstile, etc.), and the transaction may be to operate the security device, for example. Furthermore, it should also be understood that the embodiments of the transaction processing systems **10, 10', 10", 10"'** described are example arrangements of features, and that other embodiments may include different arrangements.

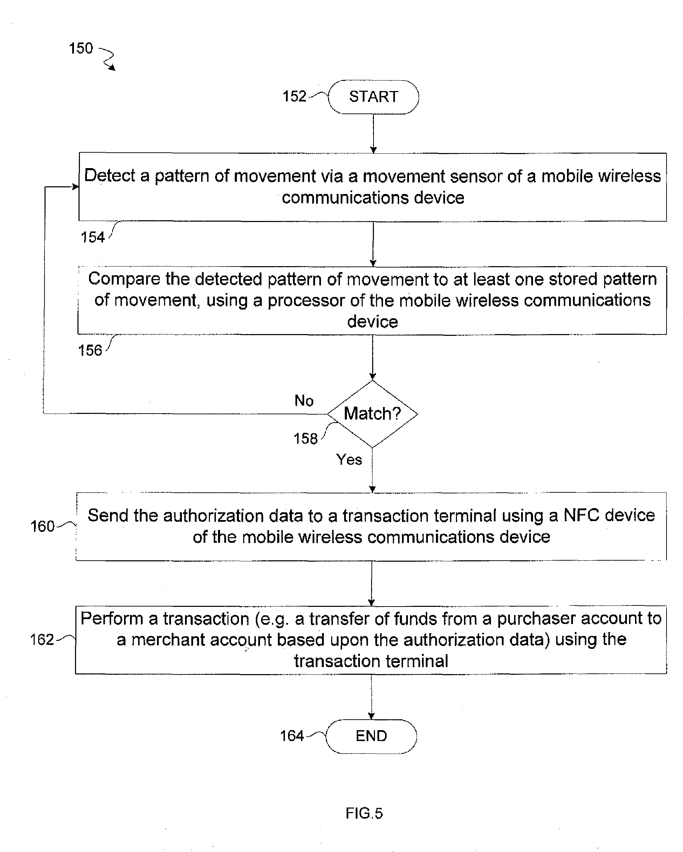

Referring now to the flowchart **150** shown in FIG. 5, related method aspects are now described. After the start (Block **152**), a pattern of movement is detected via a movement sensor **17** of a mobile wireless communications device **14** (Block **154**). Then, the detected pattern of movement is compared to at least one stored pattern of movement, using a processor 16 of the mobile wireless communications device **14** (Block **156**)**.**

At Block **158**, if the detected pattern of movement is not determined to match or correspond to at least one of the stored patterns of movement, the mobile wireless communications **14** may continue to detecting a pattern of movement via the movement sensor **17**, at Block **154**, or discontinue movement detection after a certain period of time, etc. If the detected pattern of movement does match or correspond with at least one of the stored patterns of movement, the authorization data is sent to a transaction terminal **12** using a NFC device **20** of the mobile wireless communications device (Block **160**). Then, the transaction terminal **12** effectuates a transfer of funds from a purchaser account to a merchant account based upon the authorization data (Block **162**). Block **164** indicates the end of the method.

In some example embodiments, different gestures may be mapped to different types of authorizations. For example, at a gas pumping station, a first gesture may authorize a purchase of $10 of gas, a second gesture may authorize a purchase of $20, and a third gesture may authorize a sufficiently high purchase limit for a fill-up. In yet another similar example embodiment, different gestures may be mapped to different payment accounts. For example, a first gesture may authorize payment using a MasterCard, and a second gesture authorizes payment using a VISA card.

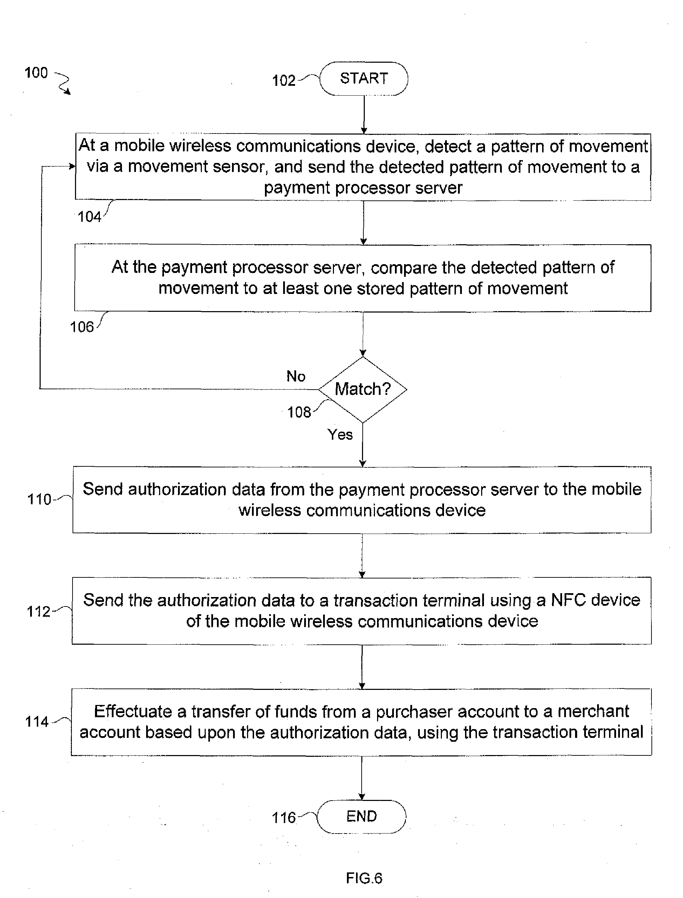

With reference to the flowchart **100** of FIG. 6, additional method aspects are now described. After the start (Block **102**), a pattern of movement is detected via a movement sensor **17"** of a mobile wireless communications device **14",** and the data representing the detected pattern of movement is sent to a payment processor server **40"** (Block **104**). Next, at the payment processor server **40",** the detected pattern of movement is compared to at least one stored pattern of movement (Block **106)**. At Block **108**, if the detected pattern of movement is not determined to match or correspond with at least one of the stored patterns of movement, the mobile wireless communications device **14"** goes back to detecting a pattern of movement via the movement sensor **17"**, at Block **154**. If the detected pattern of movement is determined to match or correspond with at least one of the stored patterns of movement, authorization data is sent from the payment processor server **40"** to the mobile wireless communications device **14"** (Block **110**). Then, the authorization data is sent to a transaction terminal **12"** using an NFC device **20"** of the mobile wireless communications device (Block **112**). The transaction terminal **12"** may then effectuate a transfer of funds from a purchaser account to a merchant account based upon the authorization data (Block **114**). Block **116** indicates the end of the method.

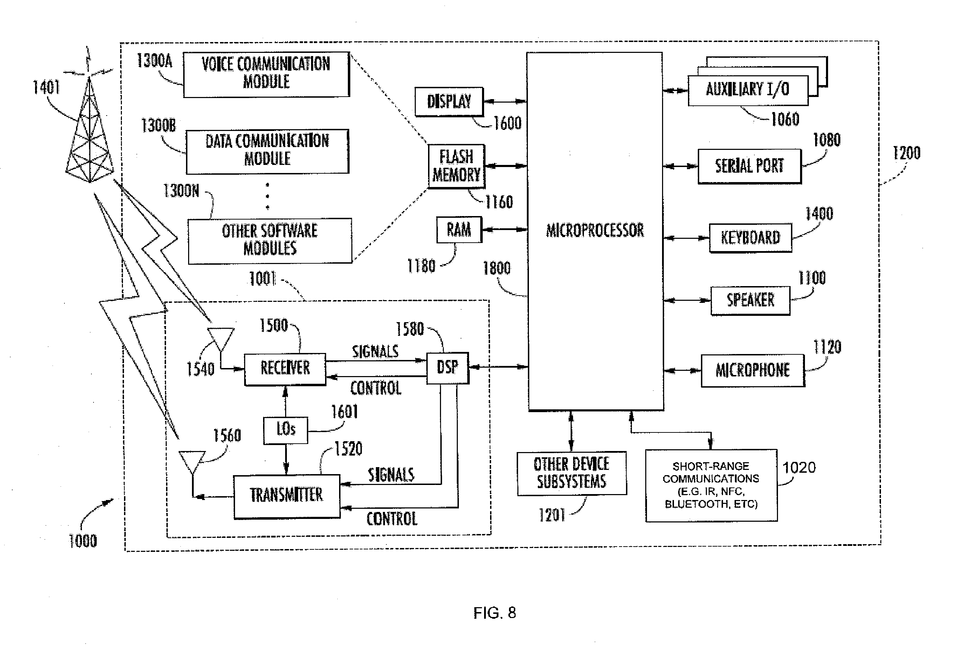

Example components of a mobile wireless communications device **1000** that may be used in accordance with the above-described embodiments are further described below with reference to FIG. 8. The device **1000** illustratively includes a housing **1200**, a keyboard or keypad **1400** and an output device **1600**. The output device shown is a display **1600**, which may comprise a full graphic LCD. Other types of output devices may alternatively be utilized. A processing device **1800** is contained within the housing **1200** and is coupled between the keypad **1400** and the display **1600**. The processing device **1800** controls the operation of the display **1600**, as well as the overall operation of the mobile device **1000**, in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 8. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communication (NFC) sensor for communicating with a NFC device or NFC tag via NFC communications.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A transaction processing system comprising:
an authorization server;
a transaction terminal including a first near field communication (NFC) device; and
a mobile wireless communications device comprising a second NFC device, at least one movement sensor, and a processor configured to
send a transaction request via said second NFC device to said first NFC device of said transaction terminal, and
send detected data representing a pattern of movement detected by said at least one movement sensor to the authorization server;
said authorization server configured to generate authorization data based upon the detected data;
said transaction terminal configured to perform a transaction based upon the transaction request and the authorization data.

2. The transaction processing system of Claim 1
wherein said authorization server is further configured to send the authorization data to said mobile wireless communications device; and wherein said processor is further configured to send the authorization data to the transaction terminal via communication between said first NFC device and said second NFC device.

3. The transaction processing system of Claim 1
wherein said mobile wireless communications device further comprises a wireless transceiver; and wherein said processor is configured to send the detected data to said authorization server via said wireless transceiver.

4. The transaction processing system of Claim 1
wherein said processor is configured to send the detected data to said authorization server via said transaction terminal.

5. The transaction processing system of Claim 1
wherein said mobile wireless communications device further comprises an input device; and wherein said processor is configured to generate the data representing the pattern of movement based upon the pattern of movement detected by said at least one movement sensor and said input device.

6. The transaction processing system of Claim 1
wherein said authorization server further comprises a memory configured to store data corresponding to at least one pattern of movement; and wherein said authorization server is configured to generate the authorization data by comparing the detected data to the stored data.

7. The transaction processing system of Claim 6
wherein the stored data corresponds to a plurality of different patterns of movement each associated with a respective different payment account.

8. The transaction processing system of Claim 1
wherein the transaction comprises causing a transfer of funds from a payment account associated with the authorization data to a merchant account.

9. A method of operating a transaction processing system comprising an authorization server, a transaction terminal comprising a first near field communication (NFC) device, and a mobile wireless communications device comprising at least one movement sensor and a second NFC device, the method comprising:
sending detected data representing a pattern of movement detected by the at least one movement sensor from the mobile wireless communications device to the authorization server;
generating authorization data based upon the detected data at the authorization server;
sending a transaction request from the second NFC device of the mobile wireless communications device to the first NFC device of the transaction terminal; and
performing a transaction based upon the transaction request and the authorization data using the transaction terminal.

10. The method of Claim 9 further comprising:
sending the authorization data to the mobile wireless communications device from the authorization server; and
sending the authorization data from the mobile wireless communications device to the transaction terminal via communication between the first NFC device and the second NFC device.

11. The method of Claim 9 wherein the mobile wireless communications device further comprises a wireless transceiver; and the method further comprising sending the detected data from the mobile wireless communications device to the authorization server via the wireless transceiver.

12. The method of Claim 9 wherein sending the detected data comprises sending the detected data from the mobile wireless communications device to the authorization server via the transaction terminal.

13. The method of Claim 9 wherein said mobile wireless communications device further comprises an input device; and the method further comprising generating the data based upon the pattern of movement detected by the at least one movement sensor and the input device.

14. The method of Claim 9 wherein the authorization sever further comprises a memory configured to store data corresponding to at least one pattern of movement; and wherein generating the authorization data further comprises generating the authorization data by comparing the detected data to the stored data.

15. The method of Claim 14 wherein the stored data corresponds to a plurality of different patterns of movement each associated with a respective different payment account.
